# EUROPÄISCHE PATENTSCHRIFT

(11) **EP 1 526 313 B1**
(45) Veröffentlichungstag und Bekanntmachung des Hinweises auf die Patenterteilung: **17.08.2011**
(21) Anmeldenummer: 04023986.5
(22) Anmeldetag: 08.10.2004
(51) Int. Cl.: H02G 9/06, F16L 9/08, F16L 3/26, F16L 9/14

(54) **Rohrleitung und Verfahren zur Herstellung**
Pipeline and pipeline production method
Tuyau et un procédé pour sa fabrication

(30) Priorität: 22.10.2003 DE 10349035
(43) Veröffentlichungstag der Anmeldung: 27.04.2005
(73) Patentinhaber: REHAU AG + Co, 95111 Rehau (DE)
(72) Erfinder: Elter, Max, 91338 Igensdorf (DE); Krause, Frank, 91096 Möhrendorf (DE)

(56) Entgegenhaltungen:
- DE-A1- 19 826 880
- FR-A- 1 469 567
- GB-A- 2 018 384
- US-A- 3 511 734
- US-A- 3 574 356

## Beschreibung

Die Erfindung betrifft eine Rohrleitung, bestehend aus einer Vielzahl von aneinander gereihten Kabelkanalformsteinen und wenigstens einer rohrförmigen Auskleidung, sowie Verfahren zur Herstellung solcher Rohrleitungen.

Beginnend in den 30er Jahren des letzten Jahrhunderts bis weit in die 60er Jahre wurden in innerstädtischen Bereichen sogenannte Kabelzüge unter Verwendung von Kabelkanalformsteinen erstellt. Diese Kabelkanalformsteine sind quaderförmige Betonbauteile mit einer Länge von annähernd 1 m, einer Höhe von ca. 0,15 m und einer typischen Breite von etwa 0,6 m. Diese Kabelkanalformsteine weisen - bei dieser Breite - vier zylindrische, die 0,15 x 0,6 m messenden Stirnflächen verbindende Lumen auf. Durch stirnseitiges Aneinanderlegen dieser Kabelkanalformsteine wurde ein Kabelzug hergestellt, in den Kabel eingezogen werden konnten.

Diese Kabelkanalformsteine weisen in der Regel Nut- und Federelemente an den Stirnseiten auf, um ein gegenseitiges Ausrichten zu erleichtern und einer gegenseitigen Verschiebung im eingebauten Zustand entgegenzuwirken.

Diese aus Kabelkanalformsteinen bestehenden Kabelzüge weisen verschiedenste Nachteile auf.
Die rauhe Oberfläche des Beton führt zunächst dazu, dass beim Einziehen von Kabeln deren Mantel beschädigt wird, so dass deren Markierung nur noch schwer oder gar nicht mehr lesbar ist.
Weiterhin sind bei dieser Bauweise konstruktionsbedingt nur gerade Kabelzüge realisierbar. Bei jeder Richtungsänderung muss demzufolge kostenaufwendig ein Schacht gesetzt werden, von dem aus die den Kabelzug bildenden Kabelkanalformsteine in einer anderen Richtung weitergeführt werden. Dies führt insbesondere in innerstädtischen Bereichen zu einer sehr großen Anzahl von Schächten, deren Instandhaltung einen immer zunehmenderen Aufwand erfordert.

Da die Kabelkanalformsteine ohne Dichtung aneinandergesetzt sind, werden Regen- und Grundwasser, Bodenfeinteile und Sand über die Verbindungsstellen in die Lumen und damit in die Kabelzüge eingespült. Dies führt einerseits zur Verschmutzung der Kabelzüge, entsprechendem Reinigungsaufwand z.B. vor dem Einziehen von Kabeln und andererseits zu Auswaschungen des Bodens mit negativen Folgen für z.B. die Statik der Kabelzüge und von Gehwegplatten.

Auch können Baumwurzeln in die Verbindungsstellen zwischen den Kabelkanalformsteinen eindringen und den freien Querschnitt der Lumen verringern.

Weiterhin wird beobachtet, dass die Kabelkanalformsteine sich aufgrund von Verkehrslasten, Baumaßnahmen in der Umgebung usw. sowohl horizontal als auch vertikal zueinander verschieben, wodurch an den Stirnflächen der Kabelkanalformsteine axiale Versätze bzw. Abwinklungen entstehen, die das Einziehen von Kabeln weiter erschweren bzw. zu deren Beschädigung führen.

Eine Rohrleitung gemäß dem Oberbegriff des Anspruchs 1 ist aus der US 3 574 356 bekannt.

Schließlich ist nachteilig, dass das Einziehen von Kabeln immer nur von Schacht zu Schacht stattfinden kann, was bei den aus vorgenannten Gründen oftmals sehr kurzen Schachtabständen zu sehr großem Verlegeaufwand führt.

Aufgabe der Erfindung ist daher, die Nachteile des bekannten Standes der Technik zu überwinden und eine Rohrleitung vorzuschlagen, die wirtschaftlich und einfach herstellbar ist, sowie ein Verfahren zur Herstellung solcher Rohrleitungen.

Erfindungsgemäß wird die Aufgabe durch die kennzeichnenden Merkmale des Anspruches 1 und des Anspruches 11 gelöst. Weitere vorteilhafte Ausgestaltungen sind in den Unteransprüchen beschrieben.

Die erfindungsgemäße Rohrleitung besteht demnach aus einer Vielzahl von aneinander gereihten Kabelkanalformsteinen und wenigstens einer die Kabelkanalformsteine verbindenden rohrförmigen Auskleidung, wobei die rohrförmige Auskleidung die Verbindungsstellen zwischen den Kabelkanalformsteinen überbrückt und damit wenigstens eines der Lumen der aneinander gereihten Kabelkanalformsteine abdichtend verbindet.

Diese rohrförmige Auskleidung liegt möglichst eng an der die Lumen bildenden Innenwand der Kabelkanalformsteine an, um einen möglichst großen nutzbaren Querschnitt zu erhalten.

Dazu besteht die rohrförmige Auskleidung aus einem Rohr, das als Folge einer Querschnittsverformung mit reduziertem Außendurchmesser in die Kabelkanalformsteine eingebracht ist und dort in einen annähernd runden Querschnitt rückgeformt an der die Lumen bildenden Innenwand der Kabelkanalformsteine anliegt.

In einer vorteilhaften Ausführungsform liegt diese rohrförmige Auskleidung nach radialer Aufweitung mittels Wärmeeintrag und/oder Innendruckerhöhung an der die Lumen bildenden Innenwand der Kabelkanalformsteine an.
Die rohrförmige Auskleidung der erfindungsgemäßen Rohrleitung besteht bevorzugt aus einem Polyolefin oder Polyvinylchlorid.
In einer vorteilhaften Ausführungsform besteht sie aus einem Polyethylen mit einer Langzeitfestigkeit von wenigstens 10 MPa. In einer besonders vorteilhaften Ausführungsform weist sie darüber hinaus eine Innen- und/oder eine Außenschicht aus vernetztem Polyethylen auf,

Anstelle verformbarer bzw. verformter Rohre können auch Schläuche in die aus Kabelkanalformsteinen bestehenden Kabelzüge eingezogen und z.B. durch Anlegen von Innendruck an der die Lumen bildenden Innenwand der Kabelkanalformsteine angelegt werden.

Die Haftung des Schlauches an der die Lumen bildenden Innenwand der Kabelkanalformsteine wird durch eine an der Außenseite des Schlauches aufgebrachte Beschichtung verbessert.

Die Fixierung des Schlauches erfolgt vorteilhafterweise dadurch, dass dieser mit einem Polymer getränkt ist, welches nach der Aufweitung des Schlauches aushärtet. In einer vorteilhaften Ausbildung des Verfahrens wird dieses Aushärten durch Wärmeeintrag oder durch Bestrahlung mit einer geeigneten Lichtquelle verursacht bzw. beschleunigt.
Mit dem erfindungsgemäßen Verfahren ist es möglich, aus Kabelzügen bestehende Kabeltrassen so auszubauen, dass von Schacht zu Schacht oder auch über nicht mehr benötigte Schächte hinwegführend wasser- und gasdichte Rohrleitungen hergestellt werden können, deren Innendurchmesser gegenüber den Innendurchmessern der ursprünglichen Kabelzüge nur unwesentlich verringert ist. Existierende Versätze zwischen den Verbindungsstellen der Kabelkanalformsteinen werden geglättet und beim Aufweiten des Rohres im günstiger Weise sogar reduziert, in jedem Fall aber als Folge der statischen Wirkung des eingebrachten und eng an der die Lumen bildenden Innenwand der Kabelkanalformsteine anliegenden Rohres an der weiteren Vergrößerung behindert.

Bei Überbrückung von Schächten, die nicht dem Zugang zum Kabelnetz dienen, sondern nur zur bei Verwendung von Kabelkanalformsteinen anders nicht realisierbaren Richtungsänderungen, überspringen die neuen Rohrleitungen einen oder mehrere Schächte, wodurch der Aufwand zum Einbringen von Kabeln oder Mehrfachrohren erheblich reduziert wird. Dabei ist es vorteilhaft, ein übermäßiges Ausdehnen der rückzuformenden Rohre im Bereich dieser Schächte durch um deren Außendurchmesser zu positionierende bzw. fixierende Haltelemente oder vergleichbar geeignete Maßnahmen zu verhindern.

Die Erfindung betrifft weiterhin ein Verfahren zur Herstellung von Rohrleitungen unter Verwendung von einzelnen Kabelkanalformsteinen. Danach wird eine rohrförmige Auskleidung in die Lumen der Kabelkanalformsteine eingebracht und anschließend durch Wärmeeintrag und/oder Erhöhung des Innendruckes so verformt, dass sie zumindest abschnittsweise eng an der Innenwand der Kabelkanalformsteine anliegt und diese abdichtend verbindet. Zusätzlich erfährt die Rohrleitung dadurch eine statische Bewehrung.

In einer einfachen Ausführungsform dieses erfindungsgemäßen Verfahrens wird die rohrförmige Auskleidung bei der Rückformung radial verformt. Dabei ist vorteilhaft, dass zur Herstellung der rohrförmigen Auskleidung ein einfach herzustellendes und damit kostengünstiges Rohr verwendet wird.
In einer vorteilhafteren Ausführungsform sieht die Erfindung deshalb die Verwendung eines Rohres vor, welches ursprünglich mit einem runden Außendurchmesser hergestellt wurde, der etwa dem der die Lumen bildenden Innenwand der Kabelkanalformsteine entspricht, welches in ein u- oder c- förmiges Rohr verformt und zur Herstellung der rohrförmigen Auskleidung in die Lumen der Kabelkanalformsteine eingebracht und anschließend durch Wärmeeintrag und/oder Erhöhung des Innendruckes so rückgeformt wird, dass es zumindest abschnittsweise eng an der die Lumen bildenden Innenwand der Kabelkanalformsteine anliegt und diese abdichtend verbindet.

Weiterhin ist vorteilhaft, dass keine Wanddickenreduzierung durch die Rückformung auftritt.

Die Erfindung soll nun an Ausführungsbeispielen, die diese nicht einschränken, näher beschrieben werden. Es zeigen:
- Fig 1:: Längsschnitt der erfindungsgemäßen Rohrleitung
- Fig. 2:: Querschnitt einer weiteren Rohrleitung

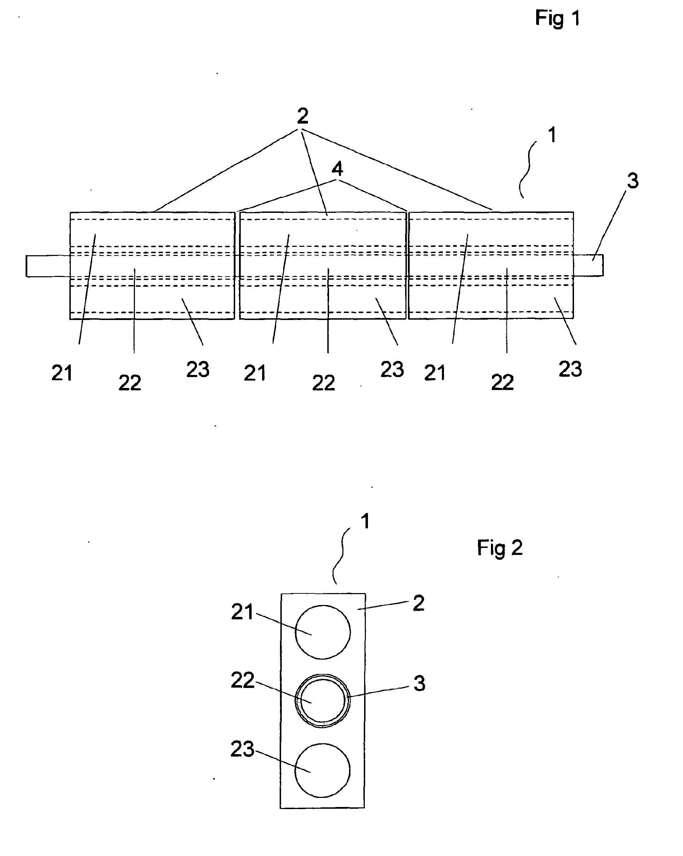

In der Figur 1 ist ein Längsschnitt der erfindungsgemäßen Rohrleitung 1 dargestellt, welcher aus einer Vielzahl von aneinander gereihten Kabelkanalformsteinen 2 besteht. Die Kabelkanalformsteine 2 weisen in diesem Ausführungsbeispiel drei Lumen 21, 22, 23 auf, welche als gestrichelte Linien gekennzeichnet sind.

Die Lumen 21, 22, 23 sind in diesem Ausführungsbeispiel parallel nebeneinander in Längsrichtung in den Kabelkanalformsteinen 2 ausgeführt. Zwischen den Stirnseiten der Kabelkanalformsteine 2 sind die Verbindungsstellen 4 ausgebildet, zwischen denen jeweils die entsprechenden Lumen 21, 22, 23 einander gegenüberliegend angeordnet sind. Im Lumen 22 der Kabelkanalformsteine 2 der erfindungsgemäßen Rohrleitung 1 ist eine rohrförmige Auskleidung 3 eingebracht, welche die Verbindungsstellen 4 zwischen den Kabelkanalformsteinen 2 überbrückt und das Lumen 22 der aneinander gereihten Kabelkanalformsteine 2 abdichtend verbindet. In diesem Ausführungsbeispiel ist die rohrförmige Auskleidung ein ursprünglich c- förmig verformtes polymeres Rohr, mit einem reduzierten Außendurchmesser, welches in die Kabelkanalformsteine 2 eingebracht worden ist und dort in einen annähernd runden Querschnitt durch Einwirkung von Wärme bzw. einer Erhöhung des Innendruckes rückgeformt, an der das Lumen 22 bildenden Innenwand der Kabelkanalformsteine 2 anliegt. Es liegt jedoch auch im Rahmen der Erfindung, dass die rohrförmige Auskleidung 3 aus einem Schlauch hergestellt ist, der mit einer ausgehärteten Polymerimprägnierung versehen ist, die eine Haftung oder eine Verklebung mit der das Lumen 22 bildenden Innenwand der Kabelkanalformsteine 2 bewirkt. Die rohrförmige Auskleidung 3, welche als Folge einer Querschnittsverformung mit reduziertem Außendurchmesser in die Kabelkanalformsteine 2 eingebracht wurde und dort durch Wärmeeintrag und/oder Erhöhung des Innendruckes so in einen annähernd runden Querschnitt rückverformt wird, dass der Außendurchmesser der rohrförmigen Auskleidung 3 an der das Lumen 22 bildenden Innenwand der Kabelkanalformsteine 2 anliegt. Die rohrförmige Auskleidung 3 weist nach dem Einbringen in die Kabelkanalformsteine 2 in ihrer axialen Ausdehnung einseitig eine größere Länge auf als die aneinander gereihten Kabelkanalformsteine 2 und schließt auf der anderen Seite bündig mit dem letzten Kabelkanalformstein 2 ab. Durch das erfindungsgemäße Verfahren zur Herstellung der Rohrleitungen 1 werden die aneinander gereihten Kabelkanalformsteine 2 über die gesamte Länge eines Kabelzuges ausgerichtet und justiert, so dass ein für das Einbringen von Kabeln und dergleichen verwendbares Lumen der rohrförmigen Auskleidung 3 entsteht.

In Figur 2 ist ein Querschnitt einer weiteren Rohrleitung 1 dargestellt, wobei die Stirnseite des Kabelkanalformsteines 2 sichtbar ist, die in diesem Ausführungsbeispiel einen rechteckigen Querschnitt aufweist. Es liegt jedoch auch im Rahmen der Erfindung, dass der Kabelkanalformstein einen anderen bspw. runden oder mehreckigen Querschnitt aufweist. In diesem Beispiel sind die Lumen 21, 22, 23 im Kabelkanalformstein 2 zentriert angeordnet, wobei sie sich über die gesamte Länge des Kabelkanalformsteines 2 ausdehnen. Das Lumen 22 des Kabelkanalformsteines 2 weist eine rohrförmige Auskleidung 3 auf, welche als Rohr mit einem kleineren Außendurchmesser als der des Innendurchmessers der das Lumen 22 bildenden Innenwand des Kabelkanalformsteines 2 ausgeführt ist und wobei der Zwischenraum zwischen der Außenwand der rohrförmigen Auskleidung 3 und der das Lumen 22 bildenden Innenwand der Kabelkanalformsteine 2 mit einem Füllstoff verdämmt ist.

## Patentansprüche

1. Rohrleitung (1), bestehend aus einer Vielzahl von aneinander gereihten Kabelkanalformsteinen (2), welche Lumen (21, 22, 23) bildende Innenwände aufweisen, und einer rohrförmigen Auskleidung (3), wobei die rohrförmige Auskleidung (3) die Verbindungsstellen (4) zwischen den Kabelkanalformsteinen (2) überbrückt und damit wenigstens eines der Lumen (22) der aneinander gereihten Kabelkanalformsteine (2) abdichtend verbindet, wobei die rohrförmige Auskleidung (3) zumindest abschnittsweise eng an der das wenigstens eine Lumen (22) bildenden Innenwand der Kabelkanalformsteine (2) anliegt,
**dadurch gekennzeichnet, dass**
die rohrförmige Auskleidung (3) aus einem Rohr besteht, das als Folge einer Querschnittsverformung mit reduziertem Außendurchmesser in die Kabelkanalformsteine (2) eingebracht ist und dort in einen annähernd runden Querschnitt rückgeformt an der das wenigstens eine Lumen (22) bildenden Innenwand der Kabelkanalformsteine (2) anliegt, wobei die rohrförmige Auskleidung (3) nach dem Einbringen in die Kabelkanalformsteine 2 in ihrer axialen Ausdehnung eine größere Länge aufweist als die aneinander gereihten Kabelkanalformsteine (2).

2. Rohrleitung nach Anspruch 1, **dadurch gekennzeichnet, dass** die rohrförmige Auskleidung (3) aus einem ursprünglich u- oder c-förmig verformten polymeren Rohr besteht.

3. Rohrleitung nach Anspruch 1 oder 2, **dadurch gekennzeichnet, dass** die rohrförmige Auskleidung (3) aus einem Polyolefin oder aus Polyvinylchlorid besteht.

4. Rohrleitung nach einem der vorgenannten Ansprüche, **dadurch gekennzeichnet, dass** die rohrförmige Auskleidung (3) aus einem Polyethylen, bevorzugt einem Polyethylen mit einer Langzeitfestigkeit von wenigsten 10 MPa, mit einer Innen- und/oder Außenschicht aus einem vernetzten Polyethylen besteht.

5. Rohrleitung nach Anspruch 1, **dadurch gekennzeichnet, dass** die rohrförmige Auskleidung (3) als Schlauch ausgeführt ist.

6. Rohrleitung nach Anspruch 5, **dadurch gekennzeichnet, dass** die rohrförmige Auskleidung (3) als Schlauch mit einer ausgehärteten Polymerimprägnierung ausgeführt ist.

7. Rohrleitung nach Anspruch 5 oder 6, **dadurch gekennzeichnet, dass** die rohrförmige Auskleidung (3) an ihrer Außenseite eine Beschichtung aufweist, die eine Haftung oder eine Verklebung mit der die Lumen (21, 22, 23) bildenden Innenwand der Kabelkanalformsteine (2) bewirkt.

8. Rohrleitung nach Anspruch 1, **dadurch gekennzeichnet, dass** die die Lumen (21, 22, 23) bildende Innenwand der Kabelkanalformsteine (2) zumindest abschnittsweise eine zur rohrförmigen Auskleidung (3) ausgehärtete Beschichtung aufweist.

9. Rohrleitung nach einem der vorangegangenen Ansprüche, **dadurch gekennzeichnet, dass** wenigstens ein freies Ende (31) der rohrförmigen Auskleidung (3) zu der die Lumen (21, 22, 23) bildenden Innenwand der Kabelkanalformsteine (2) abgedichtet ist.

10. Rohrleitung nach Anspruch 9, **dadurch gekennzeichnet, dass** die Abdichtung vorzugsweise als Dichtring oder Klemmring ausgeführt ist.

11. Verfahren zur Herstellung von Rohrleitungen (1) unter Verwendung von einzelnen Kabelkanalformsteinen (2), welche Lumen (21, 22, 23) bildende Innenwände aufweisen, **dadurch gekennzeichnet, dass** eine rohrförmige Auskleidung (3) in wenigstens eines der Lumen (22) der Kabelkanalformsteine (2) eingebracht und danach durch Wärmeeintrag und/oder Erhöhung des Innendruckes so verformt wird, dass sie zumindest abschnittsweise eng an der Innenwand der Kabelkanalformsteine (2) anliegt und diese abdichtend verbindet, wobei die rohrförmige Auskleidung (3) aus einem Rohr hergestellt wird, das als Folge einer Querschnittsverformung mit reduziertem Außendurchmesser in die Kabelkanalformsteine (2) eingebracht und dort so in einen annähernd runden Querschnitt rückgeformt wird, dass sein Außendurchmesser an der das wenigstens eine Lumen (22) bildenden Innenwand der Kabelkanalformsteine (2) anliegt.

12. Verfahren nach Anspruch 11, **dadurch gekennzeichnet, dass** die rohrförmige Auskleidung (3) als u- oder c-förmig verformtes polymeres Rohr in die Lumen (21, 22, 23) der Kabelkanalformsteine (2) eingebracht wird.

13. Verfahren nach einem der Ansprüche 11 bis 12, **dadurch gekennzeichnet, dass** die rohrförmige Auskleidung (3) durch Erhöhung des Innendruckes bis zum Anliegen an die das Lumen (21, 22, 23) bildenden Innenwand der Kabelkanalformsteine (3) aufgeweitet wird.

14. Verfahren nach Anspruch 11, **dadurch gekennzeichnet, dass** die rohrförmige Auskleidung (3) aus einem Rohr mit kleinerem Außendurchmesser als dem Innendurchmesser der die Lumen (21, 22, 23) bildenden Innenwand der Kabelkanalformsteine (2) hergestellt wird, das ohne Querschnittsverformung in die Lumen (21,22,23) der Kabelkanalformsteine (2) eingebracht und durch Erhöhung des Innendruckes bis zum Anliegen an die die Innenwand bildenden Lumen (21, 22, 23) der Kabelkanalformsteine aufgeweitet wird.

15. Verfahren nach Anspruch 11, **dadurch gekennzeichnet, dass** die rohrförmige Auskleidung (3) aus einem Schlauch hergestellt wird, der als Folge einer Querschnittsverformung mit reduziertem Außendurchmesser in Kabelkanalformsteine (2) eingebracht und dort so in einen annähernd runden Querschnitt rückgeformt wird, dass sein Außendurchmesser an der die Lumen (21, 22, 23) bildenden Innenwand der Kabelkanalformsteine (2) anliegt.

## Claims

1. Pipeline (1), comprising a multiplicity of cable channel forming blocks (2), which are arranged against one another in series and have inner walls forming lumens (21, 22, 23), and a tubular lining (3), the tubular lining (3) bridging the joins (4) between the cable channel forming blocks (2) and thereby connecting in a sealing manner at least one of the lumens (22) of the cable channel forming blocks (2) arranged against one another in series, the tubular lining (3) lying at least in certain portions closely against the inner wall of the cable channel forming blocks (2) forming the at least one lumen (22),
**characterized in that**
the tubular lining (3) comprises a tube which has been introduced into the cable channel forming blocks (2) with a reduced outside diameter as a result of a cross-sectional deformation and, reverting there to an approximately round cross section, lies against the inner wall of the cable channel forming blocks (2) forming the at least one lumen (22), the tubular lining (3) having a greater length in its axial extent after being introduced into the cable channel forming blocks (2) than the cable channel forming blocks (2) arranged against one another in series.

2. Pipeline according to Claim 1, **characterized in that** the tubular lining (3) comprises a polymeric tube originally deformed in a u- or c-shaped manner.

3. Pipeline according to Claim 1 or 2, **characterized in that** the tubular lining (3) consists of a polyolefin or a polyvinyl chloride.

4. Pipeline according to one of the preceding claims, **characterized in that** the tubular lining (3) consists of a polyethylene, preferably a polyethylene with a fatigue strength of at least 10 MPa, with an inner and/or outer layer of a crosslinked polyethylene.

5. Pipeline according to Claim 1, **characterized in that** the tubular lining (3) is configured as a flexible tube.

6. Pipeline according to Claim 5, **characterized in that** the tubular lining (3) is configured as a flexible tube with a cured polymer impregnation.

7. Pipeline according to Claim 5 or 6, **characterized in that** the tubular lining (3) has on its outer side a coating which brings about an adhesive attachment or bond with the inner wall of the cable channel forming blocks (2) forming the lumens (21, 22, 23).

8. Pipeline according to Claim 1, **characterized in that** the inner wall of the cable channel forming blocks (2) forming the lumens (21, 22, 23) has at least in certain portions a coating that is cured with respect to the tubular lining (3).

9. Pipeline according to one of the preceding claims, **characterized in that** at least one free end (31) of the tubular lining (3) is sealed with respect to the inner wall of the cable channel forming blocks (2) forming the lumens (21, 22, 23).

10. Pipeline according to Claim 9, **characterized in that** the sealing is preferably configured as a sealing ring or clamping ring.

11. Method for producing pipelines (1) using individual cable channel forming blocks (2) which have inner walls forming lumens (21, 22, 23), **characterized in that** a tubular lining (3) is introduced into at least one of the lumens (22) of the cable channel forming blocks (2) and is then deformed by heat input and/or by increasing the internal pressure in such a way that it lies at least in certain portions closely against the inner wall of the cable channel forming blocks (2) and connects them in a sealing manner, the tubular lining (3) being produced from a tube which is introduced into the cable channel forming blocks (2) with a reduced outside diameter as a result of cross-sectional deformation and reverts there to an approximately round cross section in such a way that its outside diameter lies against the inner wall of the cable channel forming blocks (2) forming the at least one lumen (22).

12. Method according to Claim 11, **characterized in that** the tubular lining (3) is introduced into the lumens (21, 22, 23) of the cable channel forming blocks (2) as a polymeric tube deformed in a u- or c-shaped manner.

13. Method according to either of Claims 11 and 12, **characterized in that** the tubular lining (3) is widened by increasing the internal pressure until it lies against the inner wall of the cable channel forming blocks (3) forming the lumen (21, 22, 23).

14. Method according to Claim 11, **characterized in that** the tubular lining (3) is produced from a tube with a smaller outside diameter than the inside diameter of the inner wall of the cable channel forming blocks (2) forming the lumens (21, 22, 23), which is introduced into the lumens (21, 22, 23) of the cable channel forming blocks (2) without any cross-sectional deformation and is widened by increasing the internal pressure until it lies against the lumens (21, 22, 23) of the cable channel forming blocks forming the inner wall.

15. Method according to Claim 11, **characterized in that** the tubular lining (3) is produced from a flexible tube which is introduced into the cable channel forming blocks (2) with a reduced outside diameter as a result of a cross-sectional deformation and reverts there to an approximately round cross section in such a way that its outside diameter lies against the inner wall of the cable channel forming blocks (2) forming the lumens (21, 22, 23).

## Revendications

1. Conduite tubulaire (1), constituée d'une pluralité de corps moulés de conduits de câbles (2) alignés les uns derrière les autres, qui présentent des parois intérieures formant des lumières (21, 22, 23) et d'un habillage tubulaire (3), l'habillage tubulaire (3) pontant les points de connexion (4) entre les corps moulés de conduits de câbles (2) et reliant ainsi de manière hermétique au moins l'une des lumières (22) des corps moulés de conduits de câbles (2) alignés les uns derrière les autres, l'habillage tubulaire (3) s'appliquant au moins en partie étroitement contre la paroi intérieure des corps moulés de conduits de câbles (2) formant l'au moins une lumière (22),
**caractérisée en ce que**
l'habillage tubulaire (3) se compose d'un tube qui est introduit suite à une déformation de section transversale avec un diamètre extérieur réduit dans les corps moulés de conduits de câbles (2) et qui y est refaçonné avec une section transversale approximativement circulaire et s'applique contre la paroi des corps moulés de conduits de câbles (2) formant l'au moins une lumière (22), l'habillage tubulaire (3) présentant, après l'introduction dans les corps moulés de conduits de câbles (2), dans son étendue axiale, une plus grande longueur que les corps moulés de conduits de câbles (2) alignés les uns derrière les autres.

2. Conduite tubulaire selon la revendication 1, **caractérisée en ce que** l'habillage tubulaire (3) se compose d'un tube polymère initialement façonné avec une forme en u ou en c.

3. Conduite tubulaire selon la revendication 1 ou 2, **caractérisée en ce que** l'habillage tubulaire (3) se compose d'une polyoléfine ou de polychlorure de vinyle.

4. Conduite tubulaire selon l'une quelconque des revendications précédentes, **caractérisée en ce que** l'habillage tubulaire (3) se compose d'un polyéthylène, de préférence d'un polyéthylène avec une longue durée de vie en fatigue, d'au moins 10 MPa, avec une couche intérieure et/ou extérieure en polyéthylène réticulé.

5. Conduite tubulaire selon la revendication 1, **caractérisée en ce que** l'habillage tubulaire (3) est réalisé sous forme de tuyau souple.

6. Conduite tubulaire selon la revendication 5, **caractérisée en ce que** l'habillage tubulaire (3) est réalisé sous forme de tuyau souple imprégné de polymère durci.

7. Conduite tubulaire selon la revendication 5 ou 6, **caractérisée en ce que** l'habillage tubulaire (3) présente un revêtement sur son côté extérieur, qui provoque une adhérence ou un collage avec la paroi intérieure des corps moulés de conduits de câbles (2) formant les lumières (21, 22, 23).

8. Conduite tubulaire selon la revendication 1, **caractérisée en ce que** la paroi intérieure formant les lumières (21, 22, 23) présente au moins en partie un revêtement durci faisant face à l'habillage tubulaire (3).

9. Conduite tubulaire selon l'une quelconque des revendications précédentes, **caractérisée en ce qu'**au moins une extrémité libre (31) de l'habillage tubulaire (3) est étanchée vers la paroi intérieure des corps moulés de conduits de câbles (2) formant les lumières (21, 22, 23).

10. Conduite tubulaire selon la revendication 9, **caractérisée en ce que** l'étanchéité est réalisée de préférence sous forme de bague d'étanchéité ou de bague de serrage.

11. Procédé de fabrication de conduites tubulaires (1) utilisant des corps moulés de conduits de câbles (2) individuels qui présentent des parois intérieures formant des lumières (21, 22, 23), **caractérisé en ce qu'**un habillage tubulaire (3) est introduit dans au moins l'une des lumières (22) des corps moulés de conduits de câbles (2) et est ensuite déformé par apport de chaleur et/ou augmentation de la pression intérieure de telle sorte qu'il s'applique au moins en partie étroitement contre la paroi intérieure des corps moulés de conduits de câbles (2) et les relie hermétiquement, l'habillage tubulaire (3) étant fabriqué à partir d'un tube qui est introduit suite à une déformation de section transversale avec un diamètre extérieur réduit à l'intérieur des corps moulés de conduits de câbles (2) et qui y est refaçonné avec une section transversale approximativement circulaire de telle sorte que son diamètre extérieur s'applique contre la paroi des corps moulés de conduits de câbles (2) formant l'au moins une lumière (22).

12. Procédé selon la revendication 11, **caractérisé en ce que** l'habillage tubulaire (3) est introduit sous forme de tube polymère façonné en forme de u ou de c dans les lumières (21, 22, 23) des corps moulés de conduits de câbles (2).

13. Procédé selon l'une quelconque des revendications 11 à 12, **caractérisé en ce que** l'habillage tubulaire (3) est élargi par augmentation de la pression intérieure jusqu'à venir en appui contre la paroi intérieure des corps moulés de conduits de câbles (2) formant la lumière (21, 22, 23).

14. Procédé selon la revendication 11, **caractérisé en ce que** l'habillage tubulaire (3) est fabriqué à partir d'un tube de plus petit diamètre extérieur que le diamètre intérieur de la paroi intérieure des corps moulés de conduits de câbles (2) formant les lumières (21, 22, 23), qui est introduit sans déformation de section transversale dans les lumières (21, 22, 23) des corps moulés de conduits de câbles (2) et qui est élargi par augmentation de la pression intérieure jusqu'à venir en appui contre la paroi intérieure des corps moulés de conduits de câbles (2) formant les lumières (21, 22, 23).

15. Procédé selon la revendication 11, **caractérisé en ce que** l'habillage tubulaire (3) est fabriqué à partir d'un tuyau souple qui est introduit suite à une déformation de section transversale de diamètre extérieur réduit dans des corps moulés de conduits de câbles (2) et qui y est refaçonné avec une section transversale approximativement circulaire de telle sorte que son diamètre extérieur s'applique contre la paroi des corps moulés de conduits de câbles (2) formant les lumières (21, 22, 23).
